# FASCICULE DE BREVET EUROPEEN

(11) **EP 2 142 603 B1**
(45) Date de publication et mention de la délivrance du brevet: **08.07.2020**
(21) Numéro de dépôt: 08787977.1
(22) Date de dépôt: 21.04.2008
(51) Int. Cl.: C08L 95/00, E01C 7/30, C08L 93/00

(54) **COMPOSITION COMPRENANT UNE FRACTION ORGANIQUE POUR LA RÉALISATION D'UNE COUCHE ET/OU D'UN REVÊTEMENT DE VOIE OU DE BÂTIMENT**
ZUSAMMENSETZUNG ENTHALTEND EINE ORGANISCHE FRAKTION ZUR HERSTELLUNG EINER SCHICHT UND/ODER EINER BESCHICHTUNG EINER STRASSE ODER EINES GEBÄUDES
COMPOSITION CONTAINING AN ORGANIC FRACTION FOR MAKING A ROAD OR BUILDING LAYER AND/OR COATING

(30) Priorité: 23.04.2007 FR 0702927
(43) Date de publication de la demande: 13.01.2010
(73) Titulaire: Eiffage Travaux Publics, 93330 Neuilly Sur Marne (FR)
(72) Inventeur: ANTOINE, Jean-Pierre, F-69340 Francheville (FR); MARCILLOUX, Jérôme, F-69360 Saint-Symphorien d'Ozon (FR)
(74) Mandataire: Plaçais, Jean Yves
(86) Numéro de dépôt international: PCT/FR2008/000556
(87) Numéro de publication internationale: WO 2008/142304

(56) Documents cités:
- EP-A- 0 514 363
- WO-A-95/18276
- GB-A- 1 088 485
- SU-A1- 1 096 268
- US-A- 3 556 827
- US-A- 3 602 931
- US-A- 4 360 615

## Description

L'invention a trait à un enrobé destiné à a construction routière comprenant des fragments solides enrobé d'un liant, c'est-à-dire une composition douée de viscosité.

L'invention concerne également un procédé de fabrication d' un tel enrobé.

On entend par composition "douée de viscosité" une composition susceptible de présenter un état visqueux, par exemple à certaines températures ou encore avant séchage, même si cette composition peut, dans d'autres conditions de température, après séchage, ou après tout autre transformation ou réaction chimique spécifique, se présenter à l'état solide. Pour simplifier l'exposé de l'invention, l'expression "douée de viscosité" sera remplacée par le qualificatif "visqueuse", sans remettre en cause la définition donnée ci-dessus.

De telles compositions présentent couramment des fractions visqueuses à base de bitume.

Le bitume trouve un large domaine d'application. Au besoin, des additifs peuvent être mélangés au bitume pour adapter ses caractéristiques à une application particulière.

Par exemple, l'industrie routière utilise couramment de telles compositions, dont la fraction visqueuse comprend principalement du bitume, pour la construction et l'entretien de nouvelles voies, telles que des routes, des trottoirs, etc.

Des compositions comprenant du bitume sont également très utilisées en tant que produits pour l'étanchéité.

De manière générale, le bitume est utilisé pour fabriquer des compositions très diverses telles que des enrobés, des enduits ou des films étanches, qui peuvent notamment être utilisés dans les domaines du bâtiment et des travaux publics.

Bien que l'utilisation de bitume pour la réalisation de la fraction visqueuse dans des compositions donne globalement satisfaction, en témoignent par exemple les millions de tonnes consommées chaque année, elle s'accompagne de nombreux inconvénients, qui seront discutés plus loin, et que l'on tente, depuis peu, de surmonter.

Il a ainsi été proposé des compositions utilisant principalement des colophanes de pin dissoutes dans une huile pétrolière ou végétale.

US 5021 476 divulgue ainsi une composition pour la réalisation d'un revêtement routier élastique. Ce revêtement est constitué d'une résine de tall-oil ou de bois, ou de leurs dérivés, mélangée à des huiles minérales ou végétales ainsi qu'à un polymère.

Cependant, la gamme de température dans laquelle la composition doit être cohésif et résistant thermiquement nécessite alors l'utilisation de plusieurs polymères en combinaison. En particulier, il est indispensable d'utiliser au moins un élastomère et un thermoplastique. Il en résulte des coûts de fabrication importants.

Pour surmonter cet inconvénient, FR 2853 647 revendique l'utilisation de colophanes de tall-oil, et de leurs dérivés, en combinaison d'une huile végétale, tout en excluant l'utilisation de polymères.

Les performances annoncées sont voisines de celles des bitumes.

Cependant, les colophanes de tall-oil sont coûteuses, limitant ainsi le développement de cette technique.

En outre, la fabrication de mélanges de ce type génère d'abondantes fumées irritantes, lesquelles gênent particulièrement les riverains des usines de fabrication et des chantiers, et du personnel d'exécution.

Par ailleurs, ces mélanges présentent des caractéristiques évolutives dans le temps, en sorte qu'il est particulièrement difficile d'assurer les performances de tels mélanges dans le temps. Les solutions à ce dernier problème envisagées impliquent des réactions chimiques pratiquement impossibles à maîtriser totalement, et conduisent à des produits très disparates en terme de performance. Un durcissement excessif de ces matériaux est d'ailleurs souvent constaté sur les chantiers.

L'invention vise à surmonter l'ensemble des inconvénients précités, en particulier les inconvénients liés à l'utilisation du bitume dans la réalisation de la fraction visqueuse de compositions visqueuses, et les problèmes rencontrés avec les solutions proposées par l'état de la technique tel que mentionné plus haut.

Pour ce faire, l'invention propose un enrobé pour la construction routière, comprenant des fragments solides enrobés d'un liant, caractérisé en ce que le liant comprend principalement de la poix de tall-oil et au moins un additif choisi parmi un ou plusieurs éléments du groupe formé des colophanes, des dérivés de colophanes, des terpènes solides et des dérivés de terpènes solides, selon les revendications 1-7.

L'invention propose également un procédé pour la fabrication dudit enrobé, selon la revendication 8.

L'utilisation de poix végétale constitue une solution économique. Cette utilisation permet en outre d'éviter les problèmes de fumées, et améliore sensiblement l'évolution du produit dans le temps.

D'autres caractéristiques et avantages de l'invention apparaîtront à l'examen de la description détaillée ci-après

La poix de tall-oil est un résidu de la distillation du tall-oil. La poix de tall-oil est constituée d'un mélange complexe de molécules. Le tall-oil est un sous-produit de l'industrie papetière.

La poix de tall-oil est très différente des autres fractions issues de la distillation du tall-oil, telles que, de la plus légère à la plus lourde, les essences de bois, l'huile de tall-oil, laquelle est souvent appelée, de manière imprécise, tall-oil, et les colophanes, aussi appelées résines.

Pour plus d'informations sur cette huile de tall-oil, on pourra se référer au document US 5021 476.

À température ambiante, la poix de tall-oil est pâteuse. Ceci la différencie des colophanes, par exemple, qui sont solides à cette température.

La poix de tall-oil comprend des fractions non saponifiables, à l'inverse des colophanes de tall-oil.

La poix de tall-oil étant un résidu de distillation, son coût est très faible, et en particulier bien inférieur à celui des colophanes de tall-oil, lesquelles peuvent être jusqu'à quatre fois plus onéreuses.

La Demanderesse a constaté que les caractéristiques de cette poix sont semblables à celles d'un bitume mou. Par exemple, le point de fragilité à froid de la poix de tall-oil, tel que défini par la norme française NF EN 12593, est voisin de - 30°C, et son point de ramollissement, tel que défini par la norme française NF EN 1427, est d'environ 35°C.

Ces caractéristiques de la poix sont adaptées à l'utilisations pour la réalisation d'une fraction visqueuse de compositions destinées à certaines des applications envisagées, telles que par exemple la réalisation de revêtements, routiers ou d'ouvrages de génie, dans des pays "froids", ou encore pour la réalisation de couches d'étanchéité sur des ouvrages enterrés, indépendamment des températures extérieures.

Cependant, pour d'autres application envisagées, ces caractéristiques de la poix, ainsi que d'autres caractéristiques physico-chimiques, doivent être adaptées, ou encore réglées, par l'utilisation d'additifs de réglages de caractéristiques physico-chimiques.

On s'intéresse tout d'abord à la réalisation d'un liant en tant que composition visqueuse, comprenant principalement de la poix de tall-oil et un ou plusieurs additifs de réglage.

Les caractéristiques de comportement en température du liant peuvent être réglées par l'utilisation d'un polymère en tant qu'additif. Il est ainsi possible, en particulier, d'abaisser la température de fragilité à froid, par exemple jusqu'à - 37°C, et d'élever la température de ramollissement, par exemple jusqu'à +70°C, rendant ainsi le liant utilisable dans une large gamme de températures.

Un tel additif permet en outre d'influer sur les caractéristiques de cohésion. On entend par cohésion, la résistance à la rupture dans la masse sous sollicitation. Ici, l'utilisation d'un polymère en tant qu'additif permet d'augmenter de manière significative la cohésion du liant.

Un grand nombre de polymères peuvent être employés. Ces polymères peuvent être éventuellement modifiés pour optimiser les interactions avec les autres composants du liant, par exemple par greffage chimique.

On peut ainsi utiliser des polymères d'origine pétrolière, tels que les polyoléfines, les polyacrylates, les polyacétates, les polyinsaturés, les polyaromatiques, les polyamides, les polyesters, les polyuréthannes et les époxy, ainsi que les dérivés et les copolymères de ces polymères.

Des polymères provenant de matières premières renouvelables, en particulier végétales, telles que la cellulose ou les dérivés de cellulose, les amidons ou les polyglycosides, les polyacides lactiques, les polyisoprènes naturels, peuvent être utilisés. De tels polymères seront préférentiellement employés, car ils permettent de se passer de tout composant d'origine pétrolière.

On peut utiliser un polymère neuf ou bien un polymère recyclé, tel que, par exemple, des poudrettes de pneus usagés. En outre, plusieurs polymères peuvent être utilisés en combinaison.

Les caractéristiques de comportement en température du liant peuvent être réglées par l'utilisation de cires en tant qu'additif.

L'ajout de cire permet d'augmenter la température de ramollissement du liant. La température de ramollissement résultant de l'ajout de cire est fonction du point de fusion de la cire ajoutée.

L'utilisation de cires de Montan, polyoléfine, paraffinique, végétale ou encore de cires d'amides permettent, par exemple, d'obtenir des liants dont la température de ramollissement, mesurée selon la méthode dite "bille et anneau", est supérieure à

L'utilisation de cires en tant qu'additif permet également de diminuer un éventuel caractère collant du liant au jeune âge. Ce caractère collant peut apparaître sur certaines formulations du liant.

Les caractéristiques de dureté du liant peuvent être réglées par l'utilisation de charges en tant qu'additif.

Ces charges de réglage peuvent renforcer le liant par un effet essentiellement physique, comme c'est le cas avec l'utilisation de noir de carbone ou encore de silice en tant que charge, ou par un effet essentiellement chimique, par exemple avec l'emploi de chaux éteinte ou vive, de ciment, de laitiers ou de "Miom" (pour mâchefer d'incinération d'ordures ménagères).

Des charges peuvent être utilisées, en tant qu'additif, pour donner au liant un aspect plus clair. Pour ce faire, on peut utiliser, par exemple, de la craie ou encore des oxydes de titane, dont certains peuvent en outre catalyser des réactions chimiques luttant contre la pollution.

Des charges peuvent en outre être utilisées, en tant qu'additif, pour changer l'aspect du liant. Par exemple, l'utilisation de poudre d'aluminium peut conférer au liant un aspect métallique, et l'utilisation de pigments ou de colorants colorent le liant.

L'utilisation de charges en tant qu'additif peut en outre permettre de régler la formulation du liant et/ou son comportement à chaud, c'est-à-dire sa température de ramollissement.

Enfin, l'utilisation de charges en tant qu'additif peut en outre permettre de régler la dissolution du liant, en particulier pour ajuster le prix de revient du liant. On peut ainsi utiliser de la craie, dont le coût est très inférieur à celui de la poix de tall-oil, pour diminuer le prix de revient du liant.

L'utilisation de colophanes, de terpènes ou de dérivés de ces deux types de produits en tant qu'additifs permet de régler la dureté du liant. L'utilisation de tels additifs permet également de régler son comportement thermique, tel que défini plus haut, c'est-à-dire principalement ses températures de fragilité à froid et de ramollissement.

Le liant peut être fabriqué de manière discontinue, en ce sens que la poix de tall-oil et les additifs peuvent être ajoutés dans un mélangeur pour un certain temps, puis transférés dans une cuve de stockage.

Le liant peut en outre être fabriqué de manière continue, en ce sens que de la poix de tall-oil et les différents additifs peuvent être introduits sans interruption ("en continu") dans un mélangeur, le liant étant alors utilisable immédiatement.

Le liant peut encore être fabriqué de manière semi-continue, en ce sens que de la poix de tall-oil et les différents additifs peuvent être introduits en continu dans le mélangeur, le liant étant finalement obtenu après un certain temps de malaxage.

Le choix du procédé sera influencé par plusieurs facteurs, en particulier, la quantité de liant à produire, le chantier auquel ce liant est destiné, les additifs utilisés, ou encore la fonction du liant lui-même.

Quel que soit le procédé de fabrication, la poix de tall-oil, et les éventuels additifs, peuvent être introduits dans le mélange dans les proportions finales du liant. Alternativement, un ou plusieurs de ces constituants peuvent être introduits en proportion concentrée, et être ultérieurement dilués, par exemple dans une usine de fabrication de liant ou directement dans un poste d'enrobage. La fabrication du liant de l'invention avec des constituants concentrés peut permettre, en particulier, de fabriquer un produit intermédiaire dont la viscosité est adaptée à la formation de granulés. Les granulés sont faciles à transporter et à stocker, et peuvent être dilués, par exemple sur site, pour obtenir le liant.

Le liant peut être utilisé chaud, typiquement à une température comprise entre environ 50°C et 200°C. Il peut être vendu, stocké et/ou transporté froid, sous la forme de granulés. En particulier, ces granulés peuvent être conditionnés dans des sacs thermofusibles, qui peuvent être directement introduits dans un malaxeur, par exemple d'un poste d'enrobage.

Le liant peut être anhydre. Il peut être également en émulsion dans l'eau, grâce à l'utilisation d'émulsifiants, par exemple anioniques, non ioniques, cationiques, amphothères et/ou polymères. Ces émulsifiants peuvent être issus, totalement ou partiellement, de la pétrochimie ou être d'origine renouvelable, en particulier animale, végétale ou même microbienne.

Le liant est utilisé pour la réalisation d'enrobés utilisés en tant que revêtement routier, selon l'invention.

On décrit donc maintenant un enrobé selon l'invention en tant que composition visqueuse, dont la fraction visqueuse est principalement constituée d'un liant décrit ci-dessus et d'un additif choisi parmi un ou plusieurs éléments du groupe formé des colophanes, des dérivés de colophanes, des terpènes solides et des dérivés der terpènes solides.

De manière générale, la fabrication d'un enrobé consiste à enrober des fragments solides à l'aide d'un liant. Ici, on utilise le liant principalement composé de poix de tall-oil et dudit additif.

Par "fragments solides", on entend ici tous fragments solides utilisables pour la réalisation d'enrobés notamment pour la construction routière, comprenant notamment les granulats minéraux naturels, et les agrégats d'enrobés résultant du recyclage des matériaux récupérés lors de la réfection des routes.

L'enrobage des fragments solides par le liant selon l'invention peut se faire selon les procédés classiques. Cet enrobage peut d'ailleurs être réalisé dans des unités de production classiques, sans que celles-ci aient à subir une quelconque modification, en particulier structurelle. Ceci constitue un avantage de l'enrobé selon l'invention.

L'enrobage des fragments solides peut ainsi être réalisé à chaud, typiquement à une température comprise entre 140°C et 200°C. Dans ce cas les fragments solides sont tous séchés.

La Demanderesse a cependant constaté qu'un procédé particulièrement intéressant consiste à enrober des fragments solides portés à une température d'environ 110°C avec du liant selon l'invention porté à une température supérieure à 130°C. L'utilisation dudit liant permet ainsi de diminuer considérablement les températures de travail, en particulier la température du liant et la température des fragments solides. Il en résulte de substantielles économies d'énergies.

L'enrobage des fragments solides avec ce liant peut également être effectué en présence d'eau, selon des procédés dits "tièdes" ou "semi-tièdes".

Cette eau peut provenir de composés spécifiquement ajoutés lors de l'enrobage et libérant de l'eau. En remplacement, ou en complément, cette eau peut provenir de fragments solides n'ayant été que partiellement séchés.

Enfin, l'enrobage peut être réalisé à température ambiante, typiquement environ 40°C, dans un procédé dit "d'enrobage à froid". Dans ce cas, le liant est préférentiellement utilisé sous forme d'émulsion.

Quel que soit le procédé de fabrication d'enrobé utilisé, les additifs présents dans ledit liant peuvent être ajoutés à la poix de tall-oil préalablement à tout enrobage.

Ces additifs peuvent également être introduits lors de la fabrication de l'enrobé. En particulier, les additifs peuvent être ajoutés aux fragments solides avant, ou après, l'introduction du liant et l'enrobage de ces fragments.

Ce dernier procédé est préféré lorsque des fibres sont utilisées en tant qu'additifs pour améliorer les caractéristiques mécaniques du liant, comme expliqué plus haut, et, par conséquent de l'enrobé. On peut alors utiliser des fibres minérales, comme par exemple les fibres de verre, de carbone, ou métalliques, ou encore des fibres organiques, telles que les fibres de polyamide, de polyester, de polyuréthanne ou de cellulose. Ces fibres peuvent être modifiées, le cas échéant, pour améliorer encore la formulation de l'enrobé. Tous les additifs exposés ci-dessus peuvent être employés seuls ou en combinaison, selon les caractéristiques recherchées pour le liant, pour la réalisation d'un liant à base de poix de tall-oil.

Le tableau ci-dessous rassemble les caractéristiques de liants obtenus à partir de poix de tall-oil chauffée à 160°C, mélangée pendant 3 heures à différents additifs à l'aide d'une hélice, ces liants ayant été refroidis puis réchauffés pendant 30 minutes à 160°C avant de subir les différents essais. Les exemples 3 et 4 représentent des liants susceptibles d'être employés pour fabriquer un enrobé selon l'invention.

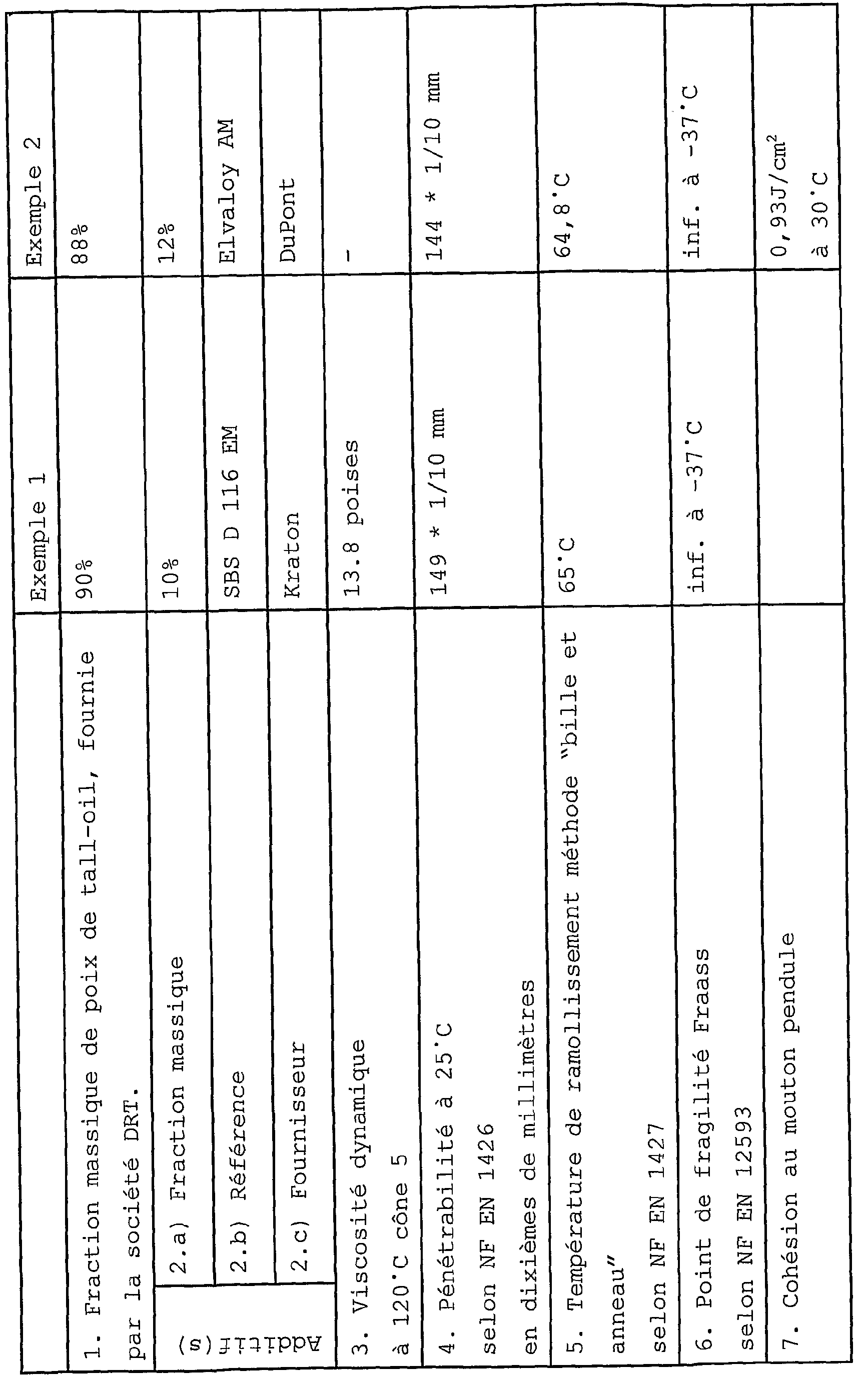

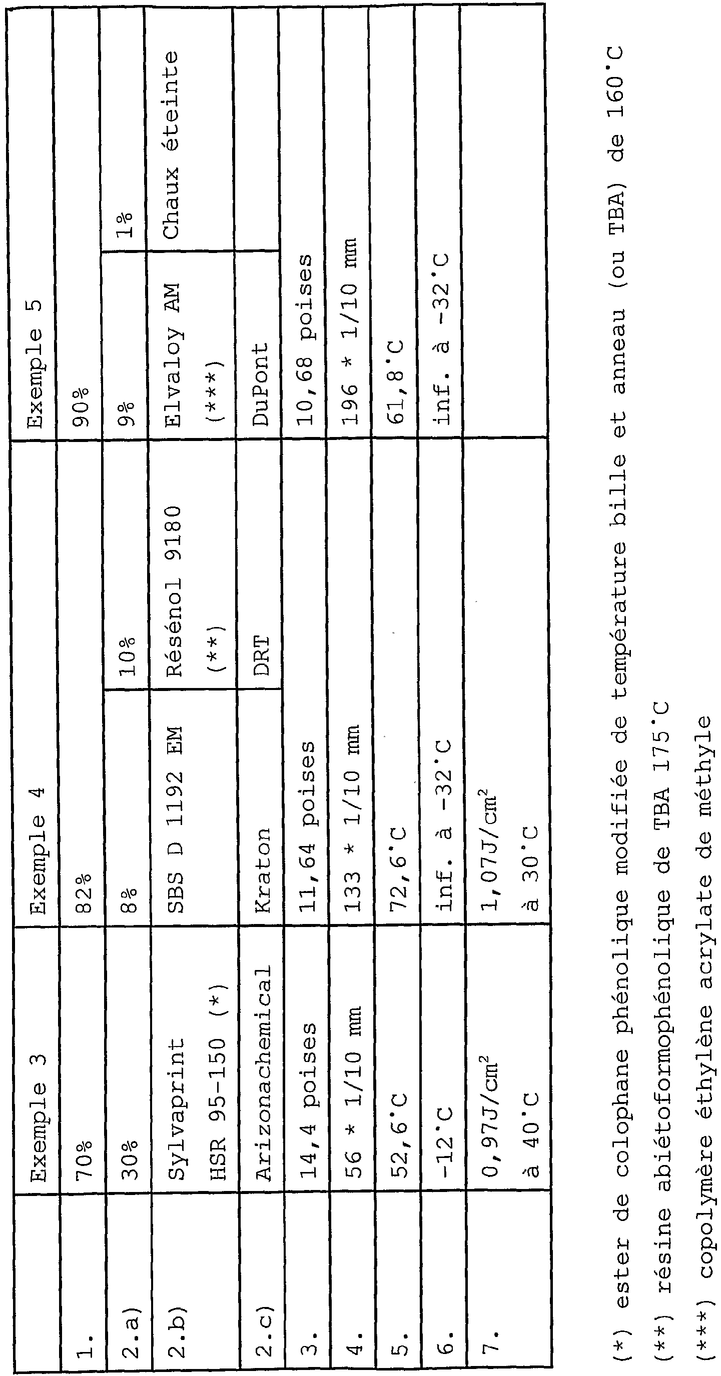

L'enrobé selon l'invention offre une alternative très intéressante à l'utilisation du bitume, tout en surmontant les inconvénients relevés dans les solutions proposées dans l'état de la technique. En effet, l'utilisation du bitume présente de nombreux inconvénients ou limites.

Une des limites du bitume réside dans sa composition, plus particulièrement de la présence en son sein de molécules appelées "asphaltènes". Ces molécules sont constituées de multiples noyaux aromatiques conjugués, qui confèrent au bitume sa dureté et sa couleur noire. Ceci limite le potentiel d'utilisation des liants bitumineux pour des enrobés de couleur, ou plus généralement pour des enrobés présentant des contraintes d'aspect.

Les bitumes résistent également très mal aux carburants.

Enfin, résultant de la distillation du pétrole, dont ils constituent la fraction lourde, les bitumes ne sont pas renouvelables. Et leur emploi contribue à la raréfaction des réserves de pétrole, laquelle risque d'aboutir à une pénurie. En outre, le bitume peut, par divers procédés catalytiques, être converti en molécules plus légères, et notamment en carburants, en sorte que son utilisation à d'autres fins augmente encore ladite pénurie. Et ceci est d'autant plus dommageable que le prix des carburants augmente tandis que le celui des procédés de conversion diminue.

Bien que le problème de la couleur du bitume soit classiquement résolu par l'utilisation de liants de synthèse, généralement obtenus par dissolution d'un polymère dans une huile pétrolière, cette solution ne règle pas le problème du caractère non renouvelable des bitumes. Cette solution peut également être suspectée en terme de santé tant le flou qui règne sur leur étiquetage sanitaire et environnemental est grand.

Le problème de la tenue aux carburants n'a pas de solution technique satisfaisante en termes sanitaires ; les brais de houille utilisés jusqu'à présent ont été classés cancérigènes, et sont sur le point de disparaître.

Enfin, un liant renouvelable implique la mise au point d'un produit issu de matières premières animales ou végétales ou microbiennes.

Le liant décrit ci-dessus pallie ces inconvénients. En particulier, selon l'invention, il peut être obtenu des compositions colorées, renouvelables, réalisées sans produit d'origine pétrolière, ou à défaut avec seulement une faible fraction de tels produits, produites de manière économique et sans danger sur l'environnement, en particulier réalisables sans dégagement nocif.

Les plus grandes fractions, en masse, du liant de l'enrobé selon l' invention sont constituées par de la poix de tall-oil et par les additifs divulgués plus haut. Pour autant, on doit comprendre que cela n'exclut aucunement la présence de fractions faibles, voire infimes, en comparaison, d'autres constituants, comme par exemple des impuretés ou des produits supplémentaires, en particulier présents dans les constituants du liant.

Les proportions des additifs varient selon la nature de ces additifs et de la mesure des caractéristiques physico-chimiques réglées recherchée. Dans certains cas très particuliers, il n'est pas exclu que ces proportions soient très faibles, voire infimes.

La poix de tall-oil présente l'avantage d'être un résidu de l'industrie papetière, en sorte que cette poix de tall-oil est disponible à faible coût et en grandes quantités.

## Revendications

1. Enrobé pour la construction routière, comprenant des fragments solides enrobés d'un liant, **caractérisé en ce que** le liant comprend principalement de la poix de tall-oil et au moins un additif choisi parmi un ou plusieurs éléments du groupe formé des colophanes, des dérivés de colophanes, des terpènes solides et des dérivés de terpènes solides.

2. Enrobé selon revendication 1, dans lequel le liant comprend en outre au moins un polymère en tant qu'additif.

3. Enrobé selon revendication 2, dans lequel le liant comprend entre 0,5 % et 50 % en masse dudit polymère.

4. Enrobé selon l'une des revendications 2 et 3, dans lequel ledit au moins un polymère comprend un ou plusieurs éléments du groupe formé des polyoléfines, des polyacrylates, des polyacétates, des polyinsaturés, des polyaromatiques, des polyamides, des polyesters, des polyuréthannes, des époxy, des dérivés et des copolymères des époxy, de la cellulose et de ses dérivés, des amidons et des polyglycosides, des polyacides lactiques, et des polyisoprènes naturels.

5. Enrobé selon l'une des revendications précédentes, comprenant entre 0,5 % et 60 % en masse du ou desdits éléments.

6. Enrobé selon l'une des revendications précédentes, dans lequel le liant comprend en outre un ou plusieurs éléments du groupe formé de fibres en tant qu'additif.

7. Enrobé selon la revendication 6, comprenant entre 1 % et 30 % du ou desdits éléments du groupe formé de fibres.

8. Procédé de fabrication d'un enrobé selon l'une des revendications 1 à 7.

## Patentansprüche

1. Überzug für den Straßenbau, umfassend von einem Bindemittel überzogene feste Fragmente, **dadurch gekennzeichnet, dass** das Bindemittel hauptsächlich Tallölpech und wenigstens einen Zusatzstoff umfasst ausgewählt aus einem oder mehreren Elementen aus der Gruppe bestehend aus Kolophanen, Nebenprodukten von Kolophanen, festen Terpenen und Nebenprodukten von festen Terpenen.

2. Überzug nach Anspruch 1, in welchem das Bindemittel weiter wenigstens ein Polymer als Zusatzstoff umfasst.

3. Überzug nach Anspruch 2, in welchem das Bindemittel zwischen 0,5 % und 50 % der Masse des Polymers umfasst.

4. Überzug nach einem der Ansprüche 2 und 3, in welchem das wenigstens eine Polymer ein oder mehrere Elemente umfasst aus der Gruppe bestehend aus Polyolefinen, Polyacrylaten, Polyacetaten, mehrfach Ungesättigten, Polyaromatischen, Polyamiden, Polyestern, Polyurethanen, Epoxiden, Nebenprodukten und Copolymeren von Epoxiden, Cellulose und deren Nebenprodukten, Stärken und Polyglycosiden, Polymilchsäuren und natürlichen Polyisoprenen.

5. Überzug nach einem der vorhergehenden Ansprüche, umfassend zwischen 0,5 % und 60 % der Masse des oder der Elemente.

6. Überzug nach einem der vorhergehenden Ansprüche, in welchem das Bindemittel weiter ein oder mehrere Elemente umfasst aus der Gruppe bestehend aus Fasern als Zusatzstoff.

7. Überzug nach Anspruch 6, umfassend zwischen 1 % und 30 % des oder der Elemente der Gruppe bestehend aus Fasern.

8. Verfahren zur Herstellung eines Überzugs nach einem der Ansprüche 1 bis 7.

## Claims

1. A coating for road construction, comprising solid fragments coated with a binder, **characterised in that** the binder mainly comprises tall-oil pitch and at least one additive selected from one or more elements from the group formed of rosins, rosin derivatives, solid terpenes and solid terpene derivatives.

2. The coating according to claim 1, wherein the binder further comprises at least one polymer as an additive.

3. The coating according to claim 2, wherein the binder comprises between 0.5% and 50% by mass of said polymer.

4. The coating according to one of claims 2 and 3, wherein said at least one polymer comprises one or more elements from the group formed of polyolefins, polyacrylates, polyacetates, polyunsaturates, polyaromatics, polyamides, polyesters, polyurethanes, epoxy, epoxy derivatives and copolymers, cellulose and its derivatives, starches and polyglycosides, lactic polyacids, and natural polyisoprenes.

5. The coating according to one of the preceding claims, comprising between 0.5% and 60% by mass of said element(s) .

6. The coating according to one of the preceding claims, wherein the binder further comprises one or more elements from the group formed of fibers as an additive.

7. The coating according to claim 6, comprising between 1% and 30% of said element(s) of the group formed of fibers.

8. A method for manufacturing a coating according to one of claims 1 to 7.
